# EUROPEAN PATENT APPLICATION

(11) **EP 3 357 844 A1**
(43) Date of publication of application: **08.08.2018**
(21) Application number: 18153950.3
(22) Date of filing: 29.01.2018
(51) Int. Cl.: B65H 3/08, B65H 3/22

(54) **ARTICLE HOLDING DEVICE**

(30) Priority: 31.01.2017 JP 2017015317
(71) Applicant: BROTHER KOGYO KABUSHIKI KAISHA, Nagoya-shi, Aichi-ken 467-8561 (JP)
(72) Inventor: HARADA, Koichi, Aichi-ken, 467-8562 (JP); TAGAWA, Yuji, Aichi-ken, 467-8562 (JP); IWAMOTO, Tsuyoshi, Aichi-ken, 467-8562 (JP); OSHIRO, Atsushige, Aichi-ken, 467-8562 (JP); UEDA, Ryo, Aichi-ken, 467-8562 (JP)
(74) Representative: J A Kemp

(57) **Abstract**

The article holding device 23 includes a base portion 32 whose lower surface has a holding portion 33 to hold the sheet-like article 9, flow paths 70-78 communicated with holes 61-68 in the holding portion 33, needles 52,54 provided in a posture inclined with respect to the holding portion 33, and air cylinders 35,36, and sucks and holds the article 9 using a negative pressure generated between the holding portion 33 and the article 9 by ejecting a fluid from the holes 61-68 via the flow paths 70-78. The air cylinders 35,36 move the needles 52, 54 to a protruding position in which the needles 52,54 protrude downward from the holding portion 33. The article holding device 23 can hold the article 9 by piercing the article 9 using the needles 52, 54 even when the article 9 is easily allows air to pass through.

## Description

### BACKGROUND

The present invention relates to an article holding device.

There is a known device that holds a thin planar component, such as a semiconductor wafer, using non-contact suction (refer to Japanese Laid-Open Patent Publication No. 2012-40621, for example). The device is provided with a base body. The lower surface of the base body has a recessed portion provided with a fluid ejection portion that ejects a fluid (air). The periphery of the recessed portion is a non-contact suction portion. The device holds the article through non-contact suction, using a negative pressure that is generated between the device and the article as a result of the fluid ejected by the fluid ejection portion passing through the non-contact suction portion.

### SUMMARY

The known device holds the article through non-contact suction using the negative pressure generated between the device and the article. Therefore, when the article is a sheet-like article having good air permeability and easily allows air to pass through, there is a possibility that the negative pressure will not be generated between the device and the article and the device will not be able to suck the article. In this case, the device cannot hold the article.

It is an object of the present invention to provide an article holding device capable of holding an article even when the article is a sheet-like article that easily allows air to pass through.

Embodiments provide an article holding device includes a base portion, flow paths, needles, drivers, an acquisition portion, and a control portion. The base portion includes a holding portion provided on a lower surface of the base portion. The flow paths are communicated with holes provided in the holding portion. The holding portion configured to suck and hold a sheet-like article using a negative pressure. The negative pressure is generated between the holding portion and the sheet-like article on a lower surface of the holding portion by a fluid. The fluid is supplied to the flow paths and is ejected from the holes. The needles are provided on the base portion in a posture inclined with respect to the holding portion. The drivers are configured to move the needles between a protruding position and a retracted position. The protruding position is a position in which the needles protrude downward from the holding portion. The retracted position is a position in which the needles are retracted above the holding portion. The acquisition portion is configured to acquire a command as to whether to move the needles to the protruding position. The control portion is configured to drive the drivers and to move the needles from the retracted position to the protruding position when the acquisition portion acquires a command to move the needles to the protruding position. The control portion is also configured to maintain the needles in the retracted position and to supply the fluid to the flow paths when the acquisition portion acquires a command to prohibit a movement of the needles to the protruding position.

The article holding device supplies the fluid to the flow paths, and thus can suck and hold the sheet-like article, such as a cloth, using the negative pressure generated between the sheet-like article and the holding portion. The article holding device can also hold the sheet-like article that easily allows air to pass through, by moving the needles to the protruding position and piercing the article using the needles. Thus, the article holding device can hold the article even when the article is the sheet-like article which easily allows air to pass through and which is unlikely to be sucked and held because the negative pressure is unlikely to be generated between the article and the holding portion. The article holding device can control whether or not to drive the needles. When the article is not held by the needles, the article holding device maintains the needles in the retracted position. Therefore, the article is not damaged by the needles. That is, the article holding device can hold the article without damage by the needles when the article is able to be sucked and held by the article holding device. The article holding device moves the needles to the protruding position only when the article is to be held by the needles. It is thus possible to hold the sheet-like article by piercing the article using the needles only when the article is the sheet-like article which easily allows air to pass through.

The needles of the article holding device may be disposed facing each other, with the holes positioned therebetween, in a direction parallel to a horizontal plane. In the article holding device, the needles are disposed facing each other with the holes positioned therebetween. Therefore, in comparison to a device in which the needles are located on one side or a device having a single needle, it is possible to stably hold the sheet-like article that easily allows air to pass through on the holding portion, using the needles.

The needles of the article holding device may be inclined in a direction in which a leading end of each of the needles separate from the holes with respect to the holding portion when the needles are in the protruding position. When the needles pierce the article, the article holding device can inhibit the article from bending. Therefore, the article holding device can stably hold the sheet-like article that easily allows air to pass through on the holding portion, using the needles, in comparison to a device in which the leading ends of the needles are not inclined with respect to the holding portion in the direction of separating from the holes.

The control portion of the article holding device may include a needle control portion and a fluid control portion. The needle control portion may be configured to drive the drivers to control the movement of the needles to the retracted position and the protruding position. The fluid control portion may be configured to control drive of a supply portion to supply the fluid to the flow paths. When the acquisition portion acquires the command to move the needles to the protruding position, the needle control portion drives the drivers to move the needles from the retracted position to the protruding position, and the fluid control portion does not drive the supply portion. When the article is held by the needles, the article holding device need not necessarily supply the fluid to the flow paths.

The control portion of the article holding device may include a needle control portion and a fluid control portion. The needle control portion may be configured to drive the drivers to control the movement of the needles to the retracted position and the protruding position. The fluid control portion may be configured to control drive of a supply portion to supply the fluid to the flow paths. When the acquisition portion acquires the command to move the needles to the protruding position, the needle control portion drives the drivers to move the needles from the retracted position to the protruding position, and the fluid control portion drives the supply portion to supply the fluid to the flow paths. The article holding device can supply the fluid to the flow paths regardless of whether the article is to be held using the needles. Therefore, when the article holding device holds the article on the holding portion, it is sufficient that the article holding device supplies the fluid to the flow paths. Thus, it becomes easy to control the supply of the fluid to the flow paths. When the article holding device holds the article on the holding portion, the fluid ejected from the holes flows between the article and the holding portion. Therefore, wrinkles are not easily formed on the article held by the holding portion.

The holding portion of the article holding device may have a horizontal portion that extends horizontally. The holes may include a first hole and a second hole. The first hole may be provided on one side in a predetermined direction parallel to the horizontal portion of the holding portion, and may be open in a first direction of a direction orthogonal to the predetermined direction. The second hole may be provided on another side, which is opposite from the one side, of the holding portion in the predetermined direction, and may be open in a second direction, which is a direction opposite to the first direction, of in a direction parallel to the first hole. The flow paths may include a first flow path and a second flow path. The first flow path may extend in the first direction toward the first hole and may be communicated with the first hole. The second flow path may extend in the second direction toward the second hole and may be communicated with the second hole. The base portion may have a recessed portion which is provided between the first hole and the second hole and which is recessed above the horizontal portion of the holding portion. When the article holding device supplies the fluid to the first flow path and the second flow path, the fluid is ejected in the first direction from the first hole, and the fluid is ejected in the second direction from the second hole. The first hole and the second hole eject the fluid in mutually opposite directions with the recessed portion positioned therebetween. It is thus possible to effectively generate a negative pressure in the space of the recessed portion between the holding portion and the article, and the article that faces the holding portion can be drawn to the recessed portion side more strongly than in a device that is not provided with the recessed portion. Therefore, the article holding device can easily increase the suction power to be larger than that of a known device, and can more reliably suck and hold the sheet-like article, such as a cloth.

The holes of the article holding device may further include a third hole and a fourth hole. The third hole may be provided on the one side of the recessed portion of the holding portion in the predetermined direction. The fourth hole may be provided on the other side of the recessed portion of the holding portion in the predetermined direction. The flow paths may further include a third flow path and a fourth flow path. The third flow path may be communicated with the third hole and the first flow path, and a direction from the third flow path toward the third hole may be the second direction. The fourth flow path may be communicated with the fourth hole and the second flow path, and a direction from the fourth flow path toward the fourth hole may be the first direction. Since the article holding device supplies the fluid to the first to fourth flow paths, in comparison to a device that supplies the fluid only to the first and second flow paths, it is possible to more reliably generate a negative pressure in the space of the recessed portion between the holding portion and the article. Thus, the article that faces the holding portion can be drawn to the recessed portion side.

The holding portion of the article holding device may be provided with a first flow path portion, a second flow path portion, a first inclined portion and a second inclined portion. The first flow path portion may be provided with the first hole and the third hole, and may protrude below the recessed portion. The second flow path portion may be disposed on the opposite side to the first flow path portion with respect to the recessed portion, and the second flow path portion may be provided with the second hole and the fourth hole, and protrudes below the recessed portion. The first inclined portion may be connected to an upper end of the first flow path portion, the recessed portion and an upper end of the second flow path portion, and may be inclined downward toward the first direction. The second inclined portion may be connected to the upper end of the first flow path portion, the recessed portion and the upper end of the second flow path portion, and may be inclined downward toward the second direction. In the article holding device, the fluid ejected from the first hole and the fourth hole moves along the first inclined portion, and the fluid ejected from the second hole and the third hole moves along the second inclined portion. Therefore, the article holding device can more reliably generate a negative pressure in the space of the recessed portion between the holding portion and the article, and can draw the article that faces the holding portion to the recessed portion side.

### BRIEF DESCRIPTION OF THE DRAWINGS

Embodiments will be described below in detail with reference to the accompanying drawings in which:
FIG. 1 is a perspective view of a conveyance system 1;
FIG. 2 is a front view of the conveyance system 1:
FIG. 3 is a left side view of an articulated robot arm device 3 and an article supply device 4 when an article holding device 23 is in a holding position and a placement table 21 is moved upward;
FIG. 4 is a perspective view of the article holding device 23;
FIG. 5 is a perspective view of the article holding device 23;
FIG. 6 is a bottom view of the article holding device 23 when needles 52 and 54 are in a protruding position;
FIG. 7 is a cross-sectional view in the direction of arrows along a line VII-VII shown in FIG. 6 when the needles 52 and 54 are in the protruding position;
FIG. 8 is a bottom view of the article holding device 23 when the needles 52 and 54 are in a retracted position;
FIG. 9 is a cross-sectional view in the direction of arrows along a line IX-IX shown in FIG. 8 when the needles 52 and 54 are in the retracted position;
FIG. 10 is an enlarged view of a periphery of the needle 54 shown in FIG. 7;
FIG. 11 is a block diagram showing an electrical configuration of the article holding device 23;
FIG. 12 is a flowchart of article holding processing according to a first embodiment;
FIG. 13 is a flowchart of article holding processing according to a second embodiment; and
FIG. 14 is a left side view of the articulated robot arm device 3 and the article supply device 4 when the article holding device 23 is moved upward from the holding position.

### DETAILED DESCRIPTION

First and second embodiments of the present invention will be explained sequentially with reference to the drawings. A schematic configuration of a conveyance system 1 that is common between the first and second embodiments will be explained. In the following explanation, left and right directions, front and rear directions, and up and down directions as indicated by arrows in the drawings are used.

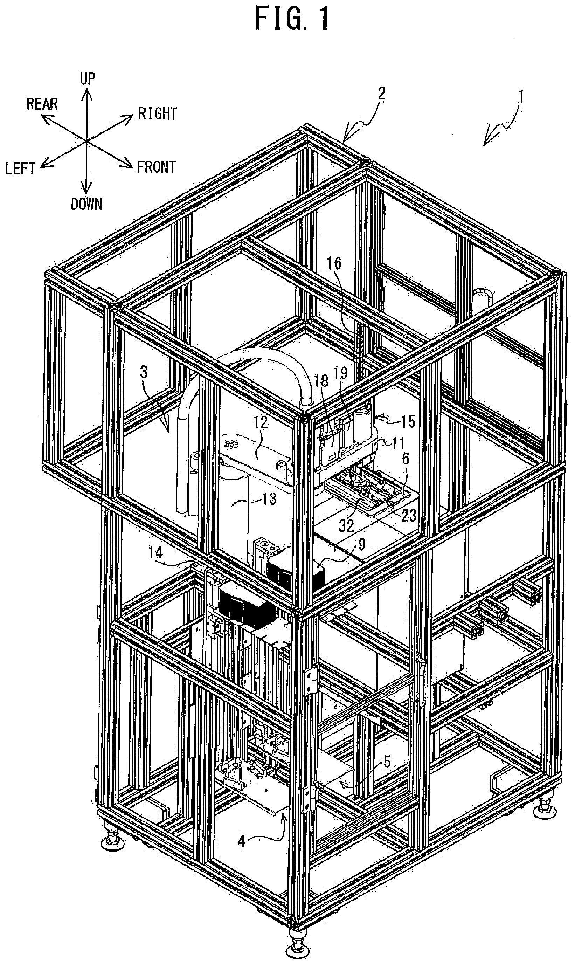

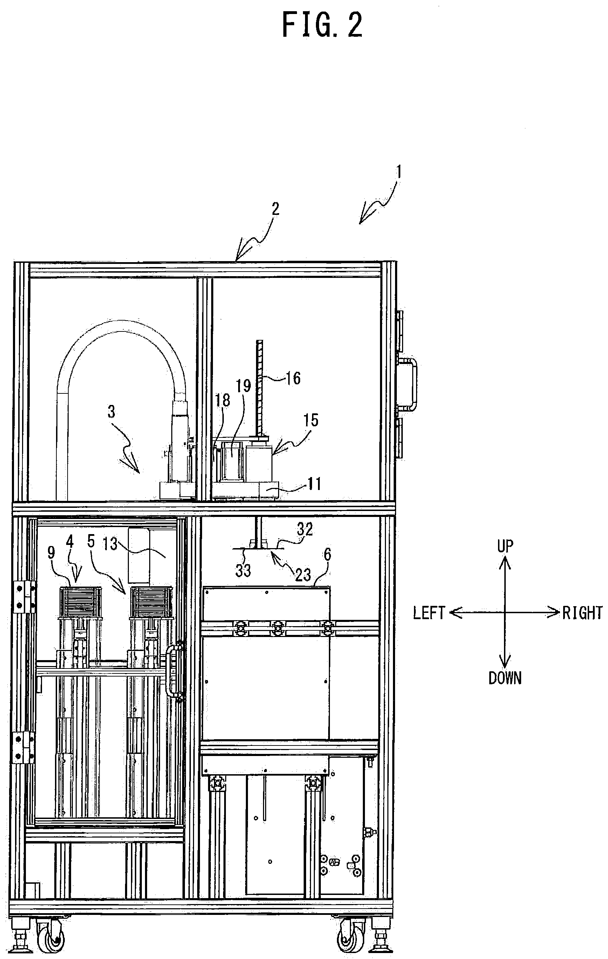

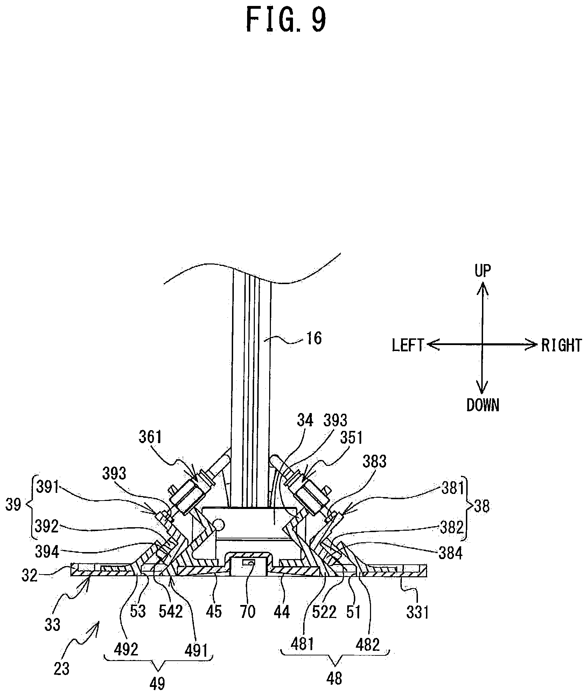

As shown in FIG. 1 and FIG. 2, the conveyance system 1 is provided with a frame 2, an articulated robot arm device (hereinafter referred to as an "arm device") 3, article supply devices 4 and 5, a work table 6 and a PC 100 (refer to FIG. 9). The frame 2 is formed by assembling rod members made of iron or aluminum into a rectangular shape. The arm device 3, the article supply devices 4 and 5, and the work table 6 are disposed on the inside of an outer frame of the frame 2. The arm device 3 is an industrial robot, and is able to convey a sheet-like article 9 held by an article holding device 23 of the article supply devices 4 and 5 to a predetermined conveyance position. The conveyance position of the present embodiment is a position in which the article holding device 23 is above the work table 6 and in which the position of the article holding device 23 in the up-down direction is lower than the position shown in FIG. 2. The conveyance position may be changed as appropriate depending on the structure of the conveyance system, such as an upper portion of a bed portion of a sewing device. The article 9 of the present embodiment is a cloth piece having a trapezoid shape with round corners. Together with the article supply devices 4 and 5, the arm device 3 conveys the article 9 onto the work table 6. The arm device 3 is provided with arm portions 11 and 12, a support portion 13 and a base portion 14. The arm portion 11 is provided with a rotation linear drive device (hereinafter referred to as a "drive device") 15.

The drive device 15 is provided with a ball screw 16, a first motor 18 and a second motor 19. The ball screw 16 extends in the up-down direction. The ball screw 16 is inserted through one end portion of the arm portion 11. The drive device 15 can rotate the ball screw 16 around its axis by the first motor 18. The drive device 15 can move the ball screw 16 along its extending direction by the second motor 19. The rotation around the ball screw 16 is rotation around an axis line of the ball screw 16 in a clockwise direction or a counterclockwise direction. The arm portion 12 extends in the front-rear direction, and the front end portion of the arm portion 12 rotatably supports another end portion of the arm portion 11. The support portion 13 extends in the up-down direction, and the upper end of the support portion 13 rotatably supports the rear end portion of the arm portion 12. The base portion 14 has a plate shape that extends horizontally, and is fixed to the frame 2. The base portion 14 is coupled to the lower end of the support portion 13. The arm device 3 is fixed to the base portion 14. The arm device 3 can rotate each of the arm portions 11 and 12.

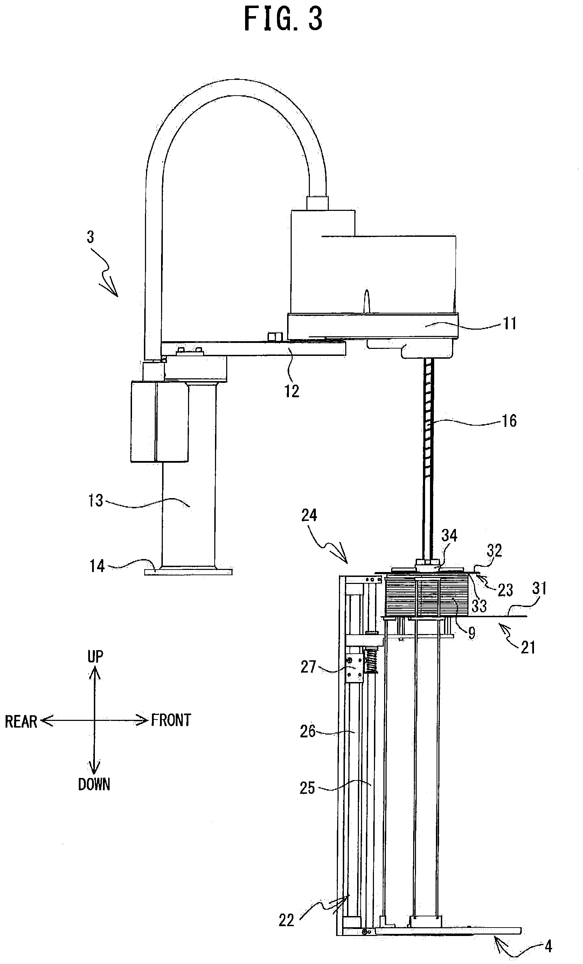

The article supply devices 4 and 5 have the same structure. Therefore, the article supply device 4 will be explained in detail and an explanation of the article supply device 5 will be omitted. As shown in FIG. 3, the article supply device 4 is provided with an article supply mechanism 24 and the article holding device 23. The article holding device 23 is common between the article supply devices 4 and 5. The article supply mechanism 24 supplies the sheet-like article 9 to the article holding device 23. The article supply mechanism 24 is fixed to the inside of the frame 2 (refer to FIG. 1). The article supply mechanism 24 is provided with a placement table 21, an air cylinder 22 and a shaft 25. The placement table 21 has a surface 31 on which a plurality of the sheet-like articles 9 can be placed. The surface 31 extends substantially horizontally, and has a rectangular shape in a plan view. The area of the surface 31 is larger than the area of the article 9. The air cylinder 22 has a shaft 26 that extends in the up-down direction, and can move the placement table 21 in the upward direction. The air cylinder 22 is a so-called rod-less cylinder. The air cylinder 22 is provided with a piston (not shown in the drawings) and a main body portion 27. The piston is provided inside the shaft 26, and has a magnet (not shown in the drawings). The main body portion 27 is provided on the outer periphery of the shaft 26 and has a magnet (not shown in the drawings). The magnet of the piston is coupled, by magnetic attraction, with the magnet of the main body portion 27 via the shaft 26. The air cylinder 22 supplies air to the interior of the shaft 26 and moves the piston, thus moving the main body portion 27 along the shaft 26. The shaft 25 extends parallel to the shaft 26. The shaft 25 is inserted through a hole provided in the rear end portion of the placement table 21. A rear portion of the placement table 21 is coupled to the main body portion 27. The placement table 21 moves along the shaft 25 together with the main body portion 27. The air cylinder 22 is connected to an air compressor (not shown in the drawings) via an air tube (not shown in the drawings). A control portion (not shown in the drawings) of the article supply mechanism 24 controls an electromagnetic valve (not shown in the drawings) provided in the air tube, and controls the drive of the air cylinder 22.

The article holding device 23 is connected to the arm device 3. The article holding device 23 is fixed to the lower end of the ball screw 16. The article holding device 23 can hold the article 9 placed on the placement table 21 in a holding position that faces the placement table 21. The holding position is a position shown in FIG. 3. When the article holding device 23 is in the holding position, a base portion 32 is located above the placement table 21. When the article holding device 23 is in the holding position, the base portion 32 is located above the article supply mechanism 24.

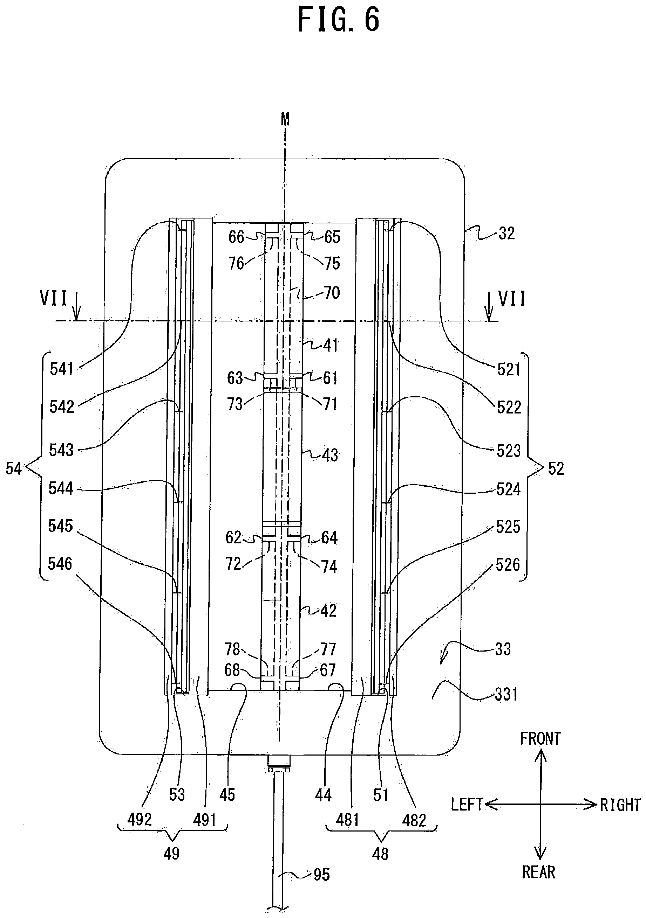

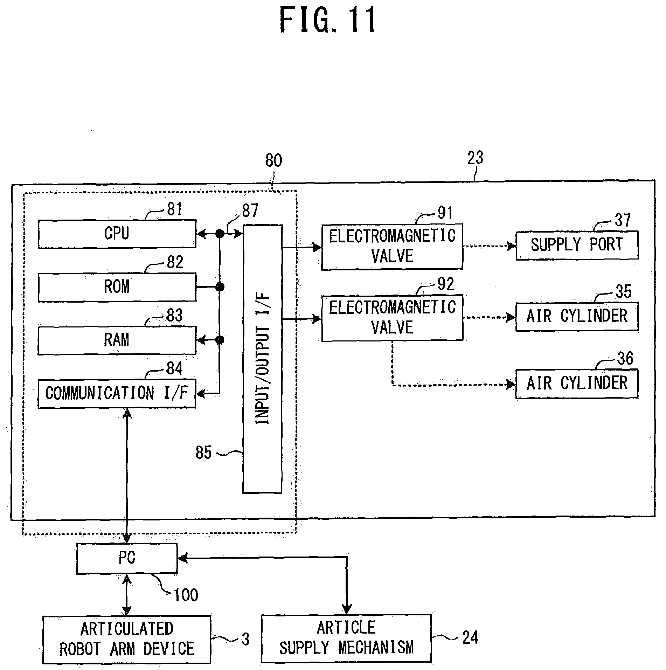

As shown in FIG. 3 to FIG. 11, the article holding device 23 is provided with the base portion 32, flow paths 70 to 78, needles 52 and 54, air cylinders 35 and 36, and a control portion 80. The base portion 32 is a rectangular shaped member in a plan view. As shown in FIG. 6, a virtual line that extends in the front-rear direction at the center of the base portion 32 in the left-right direction is called a center line M. The base portion 32 is provided with a holding portion 33, a mounting portion 34, support portions 38, 39, 48 and 49, and a supply port 37 (refer to FIG. 11). The holding portion 33 is the lower surface of the base portion 32 and holds the article 9. An outer peripheral portion of the holding portion 33 is a horizontal portion 331 that extends horizontally. The flow paths 70 to 78 are provided in the base portion 32, and are communicated with holes 61 to 68 provided in the holding portion 33.

The holding portion 33 is provided with a first flow path portion 41, a recessed portion 43, a second flow path portion 42, a first inclined portion 44 and a second inclined portion 45. The horizontal portion 331 surrounds the first flow path portion 41, the recessed portion 43, the second flow path portion 42, the first inclined portion 44 and the second inclined portion 45. The first flow path portion 41, the recessed portion 43 and the second flow path portion 42 have a rectangular shape that is long in the front-rear direction in a bottom view. The first flow path portion 41, the recessed portion 43 and the second flow path portion 42 have the same length in the left-right direction, and are aligned on the center line M of the base portion 32 from the front to the rear in that order. The first flow path portion 41 and the second flow path portion 42 have the same length in the front-rear direction, and their length is longer than the length of the recessed portion 43 in the front-rear direction. The first flow path portion 41 is provided with the holes 61, 63, 65 and 66, and protrudes below the recessed portion 43. The holes 61, 63, 65 and 66 are provided on one side of the holding portion 33 in a predetermined direction. The predetermined direction of the present embodiment is the front-rear direction, and the one side is the front side. The predetermined direction is parallel to the horizontal portion 331 of the holding portion 33. The holes 61 and 65 are provided in the right surface of the first flow path portion 41 and open rightward direction, and the holes 63 and 66 are provided in the left surface of the first flow path portion 41 and open leftward direction. The holes 65 and 66 are disposed forward of the holes 61 and 63 such that the holes 65 and 66 face each other. The recessed portion 43 is provided between the hole 61 and the hole 62, and is recessed above the horizontal portion 331 of the holding portion 33. The recessed portion 43 is recessed above the holes 61 to 68. The second flow path portion 42 is disposed on the opposite side to the first flow path portion 41 with respect to the recessed portion 43, is provided with the holes 62, 64, 67 and 68, and protrudes below the recessed portion 43. The holes 62, 64, 67 and 68 are provided on the other side of the holding portion 33 in the predetermined direction. The other side is opposite from the one side. In the present embodiment, the other side is the rear side. The holes 64 and 67 are provided in the right surface of the second flow path portion 42 and open rightward direction, and the holes 62 and 68 are provided in the left surface of the second flow path portion 42 and open leftward direction. The holes 61 to 68 are provided below the upper end of the recessed portion 43. The holes 67 and 68 are disposed rearward of the holes 62 and 64 such that the holes 67 and 68 face each other. The direction in which the holes 61, 63, 65 and 66 are open is parallel to the direction in which the holes 62, 64, 67 and 68 are open. The holes 61 to 68 have the same size and are in the same position in the up-down direction. The holes 61, 64, 65 and 67 are located to the right of (in a first direction from) the center line M of the base portion 32. The holes 62, 63, 66 and 68 are located to the left of (in a second direction from) the center line M. In the front-rear direction, a distance from the holes 61 and 63 to a rear end portion of the first flow path portion 41 and a distance from the holes 62 and 64 to a front end portion of the second flow path portion 42 are shorter than half the length of the recessed portion 43.

The first inclined portion 44 is provided to the right of the first flow path portion 41, the recessed portion 43 and the second flow path portion 42. The first inclined portion 44 is connected to the upper end of the first flow path portion 41, the recessed portion 43 and the upper end of the second flow path portion 42, and is inclined downward to the right. The second inclined portion 45 is provided to the left of the first flow path portion 41, the recessed portion 43 and the second flow path portion 42. The second inclined portion 45 is connected to the upper end of the first flow path portion 41, the recessed portion 43 and the upper end of the second flow path portion 42, and is inclined downward to the left. The first inclined portion 44 and the second inclined portion 45 are disposed facing each other in the left-right direction such that the first flow path portion 41, the recessed portion 43 and the second flow path portion 42 are positioned therebetween. The article holding device 23 ejects, from the holes 61 to 68, a fluid supplied to the flow paths 70 to 78. Thus, the article holding device 23 sucks and holds the article 9, using the negative pressure generated between the holding portion 33 and the article 9. The fluid of the present embodiment is air.

The flow path 70 extends in the front-rear direction. The flow path 70 branches into the eight flow paths 71 to 78 that extend in the left-right direction. The flow path 71 is communicated with the hole 61, and extends to the right (in the first direction) toward the hole 61. The flow path 72 is communicated with the hole 62, and extends to the left (in the second direction), which is the opposite direction from the first direction, toward the hole 62. The flow path 73 is communicated with the hole 63 and the flow path 71. The direction from the flow path 73 toward the hole 63 is the leftward direction. The flow path 74 is communicated with the hole 64 and the flow path 72. The direction from the flow path 74 toward the hole 64 is the rightward direction. The flow paths 75 and 77 extend to the right, and are communicated with the holes 65 and 67, respectively. The flow paths 76 and 78 extend to the left, and are communicated with the holes 66 and 68, respectively.

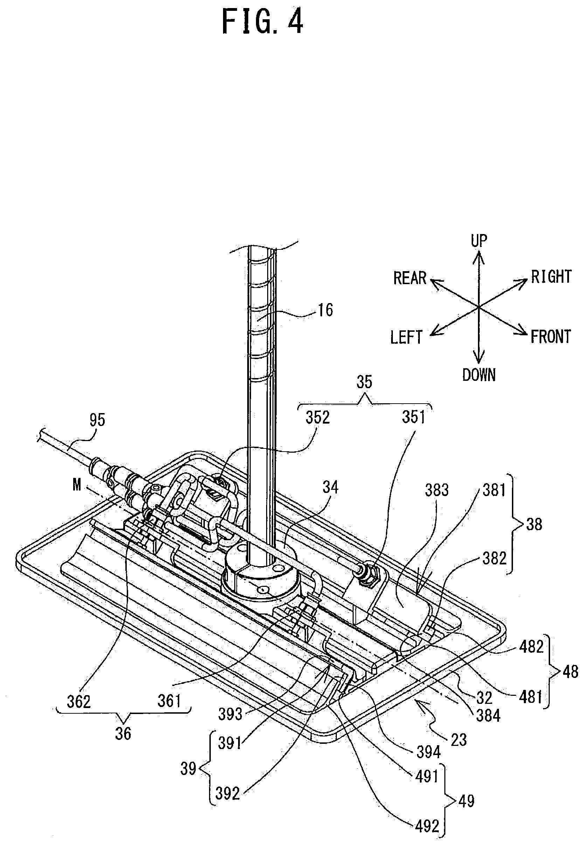

As shown in FIG. 4, FIG. 7 and FIG. 9, the mounting portion 34 is detachably mounted on the lower end of the ball screw 16 of the arm device 3. The mounting portion 34 is provided at the center of the upper surface of the base portion 32. The mounting portion 34 has a circular cylindrical shape in a plan view, and is inserted through the lower end of the ball screw 16.

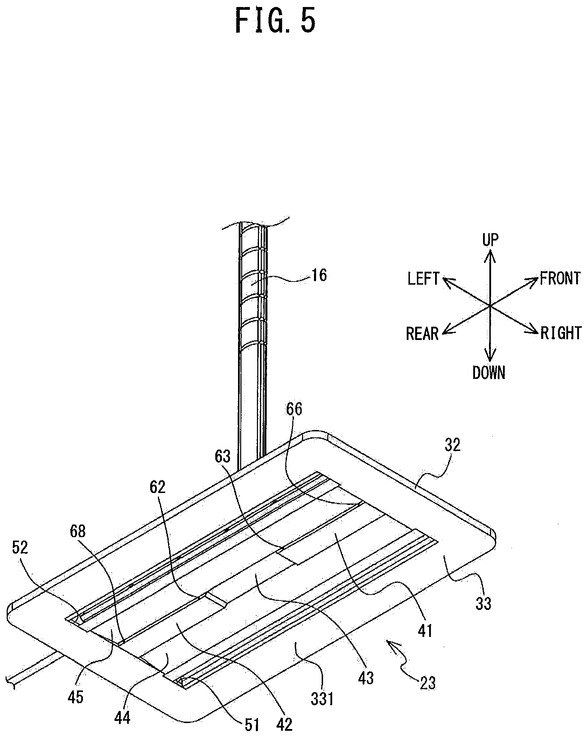

As shown in FIG. 5 to FIG. 9, the needles 52 and 54 are provided in the base portion 32 in an inclined posture with respect to the holding portion 33. In the left-right direction that is parallel to the horizontal portion 331, the needles 52 and 54 are disposed facing each other such that the holes 61 to 68 are positioned therebetween. The needles 52 and 54 are inclined with respect to the holding portion 33 in a direction in which the leading end of each of the needles 52 and 54 are separated from the holes 61 to 68. The needles 52 are located to the right of the center line M. The needles 52 include six needles 521 to 526 and their leading ends are directed to the lower right side. The needles 521 to 526 are aligned at substantially equal intervals in the front-rear direction. The needles 54 are located to the left of the center line M. The needles 54 include six needles 541 to 546 and their leading ends are directed to the lower left side. The needles 541 to 546 are aligned at substantially equal intervals in the front-rear direction. The needles 52 and 54 are respectively inserted through the holes 51 and 53 provided in the holding portion 33. The holes 51 and 53 have a rectangular shape and extend in the front-rear direction.

The support portions 38 and 48 are provided to the right of the center line M, and the support portions 39 and 49 are provided to the left of the center line M. The support portion 38 extends in the front-rear direction and movably supports the needles 52. The support portion 38 has members 381 and 382. The member 381 has an L shape in a front view, and has a section 383 that is inclined upward to the right and a section 384 that is inclined downward to the right from the left end of the section 383. The member 382 has a plate shape that extends in parallel to the section 384, and is coupled to the section 384. The support portion 38 supports the needles 52 by sandwiching the needles 52 between the section 384 and the member 382. The support portion 39 extends in the front-rear direction and movably supports the needles 54. The support portion 39 has members 391 and 392. The member 391 has an L shape in a front view, and has a section 393 that is inclined upward to the left and a section 394 that is inclined downward to the left from the right end of the section 393. The member 392 has a plate shape that extends in parallel to the section 394, and is coupled to the section 394. The support portion 39 supports the needles 54 by sandwiching the needles 54 between the section 394 and the member 392.

The support portions 48 and 49 extend in the front-rear direction and are provided on the upper surface of the base portion 32. The support portion 48 is provided with members 481 and 482, and movably supports the support portion 38 between the members 481 and 482. The hole 51 extends between the members 481 and 482 such that it is inclined downward to the right. The support portion 48 guides the movement of the support portion 38. The support portion 49 is provided with members 491 and 492, and movably supports the support portion 39 between the members 491 and 492. The hole 53 extends between the members 491 and 492 such that it is inclined downward to the left. The support portion 49 guides the movement of the support portion 39.

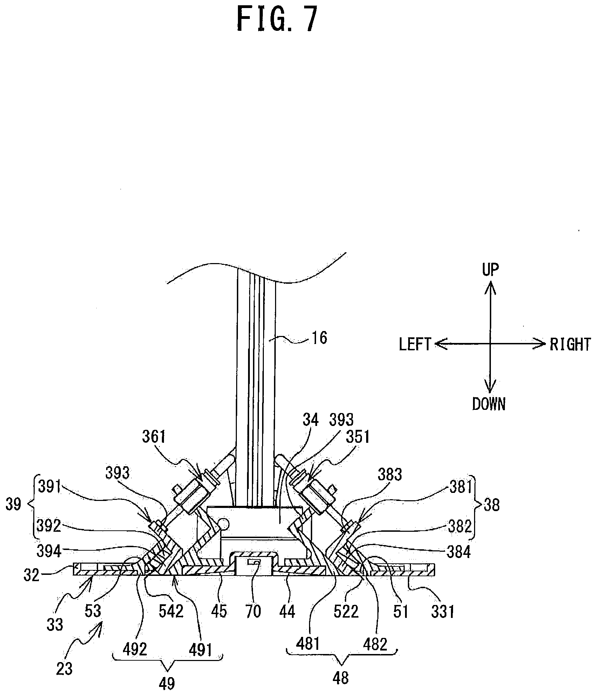

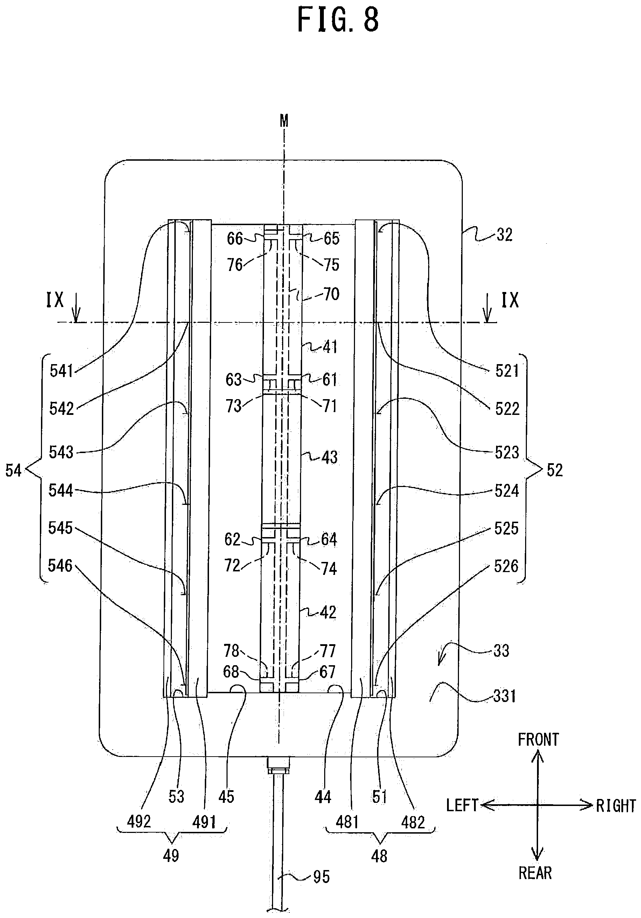

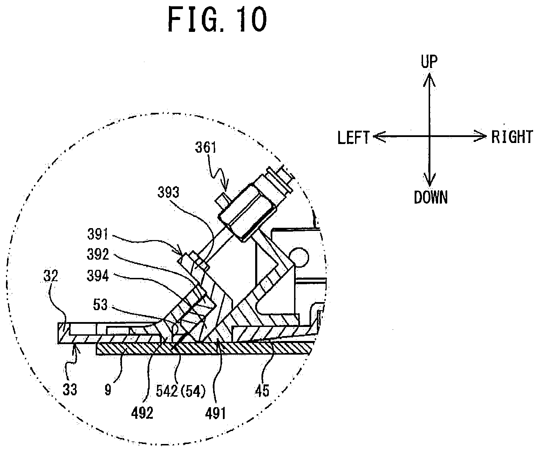

The air cylinders 35 and 36 are provided on the upper surface side of the base portion 32. The air cylinder 35 moves between the protruding position in which the needles 52 protrude downward from the hole 51 of the holding portion 33 and a retracted position in which the needles 52 are retracted above the holding portion 33. The air cylinder 35 includes air cylinders 351 and 352 that are aligned in the front-rear direction. The air cylinder 36 moves between the protruding position in which the needles 54 protrude downward from the hole 53 of the holding portion 33 and the retracted position in which the needles 54 are retracted above the holding portion 33. The air cylinder 36 includes air cylinders 361 and 362 that are aligned in the front-rear direction. Each of the air cylinders 35 and 36 has a piston (not shown in the drawings) and an urging member (not shown in the drawings) that urges the piston upward. The piston of the air cylinder 35 is coupled to the needles 52 via the support portion 38. The piston of the air cylinder 36 is coupled to the needles 54 via the support portion 39. FIG. 6 and FIG. 7 show the protruding position and FIG. 8 and FIG. 9 show the retracted position. As shown in FIG. 10, a protruding amount of the needles 52 and 54 from the holding portion 33 in the protruding position is smaller than the thickness of the article 9. The protruding amount may be changed in accordance with the thickness of the article 9. The air cylinders 35 and 36 are connected to an air compressor (not shown in the drawings) via an air tube 95. The supply port 37 (refer to FIG. 10) is provided in the upper surface of the base portion 32, communicated with the flow path 70, and connected to the air compressor via an air tube (not shown in the drawings). The air tube connected to the supply port 37 is different from the air tube 95 connected to the air cylinders 35 and 36.

The control portion 80 controls the drive of the air cylinders 35 and 36 and the supply of the fluid to the flow paths 70 to 78. When a command to move the needles 52 and 54 to the protruding position is acquired, the control portion 80 drives the air cylinders 35 and 36 and moves the needles 52 and 54 from the retracted position to the protruding position. When a command to prohibit the movement of the needles 52 and 54 to the protruding position is acquired, the control portion 80 drives the air cylinders 35 and 36, maintains the needles 52 and 54 in the retracted position, and supplies the fluid to the flow paths 70 to 78.

As shown in FIG. 2, the work table 6 is a cuboid shaped table that is disposed to the right of the article supply devices 4 and 5. The upper surface of the work table 6 is substantially horizontal. The height of the upper surface of the work table 6 is substantially the same as the height of the upper ends of the article supply devices 4 and 5. The PC 100 is a known computer. The PC 100 is electrically connected to the article holding device 23, the article supply mechanism 24 and the arm device 3, and transmits and receives signals to and from each of the devices.

An electrical configuration of the article holding device 23 will be explained with reference to FIG. 11. The control portion 80 of the article holding device 23 is provided with a CPU 81, a ROM 82, a RAM 83, a communication I/F 84 and an input/output I/F 85. The CPU 81, the ROM 82 and the RAM 83 are electrically connected to the input/output I/F 85 via a signal line 87. The CPU 81 performs processing in accordance with various programs stored in the ROM 82, and controls the article holding device 23. The ROM 82 stores the various programs including an article supply program, various initial setting parameters and the like. The RAM 83 temporarily stores calculation results of the CPU 81, various data and the like. The communication I/F 84 is electrically connected to the input/output I/F 85. The communication I/F 84 is an interface for serial communication, for example. The communication I/F 84 is connected to a communication I/F of the PC 100, and the CPU 81 acquires various commands from the PC 100. The communication I/F of the PC 100 is connected to a communication I/F provided in a control portion of the arm device 3, and a communication I/F provided in a control portion of the article supply mechanism 24. The control portion 80 of the article holding device 23 may directly control the article supply mechanism 24.

The input/output I/F 85 is electrically connected to electromagnetic valves 91 and 92. The electromagnetic valve 91 is provided in a supply channel of the air that is supplied to the supply port 37 by the air compressor. The electromagnetic valve 92 is provided in a supply channel of the air that is supplied to the air cylinders 35 and 36 by the air compressor. The CPU 81 opens and closes the electromagnetic valves 91 and 92, and thus controls the drive and non-drive of the article holding device 23.

An overview of the processing performed by the conveyance system 1 will be explained. In the conveyance system 1, the arm device 3, and the article holding device 23 and the article supply mechanism 24 of the article supply devices 4 and 5 work in concert with each other, and convey the uppermost article 9 placed on the placement table 21 by the article supply mechanism 24 to the conveyance position on the work table 6. In accordance with a command from the PC 100, the arm device 3 controls the position of the article holding device 23 in the up-down direction and the horizontal direction. The control portion 80 of the article holding device 23 controls the drive of the air cylinders 35 and 36 and the supply of the fluid to the flow paths 70 to 78. In accordance with a command from the PC 100, the article supply mechanism 24 moves the placement table 21 upward.

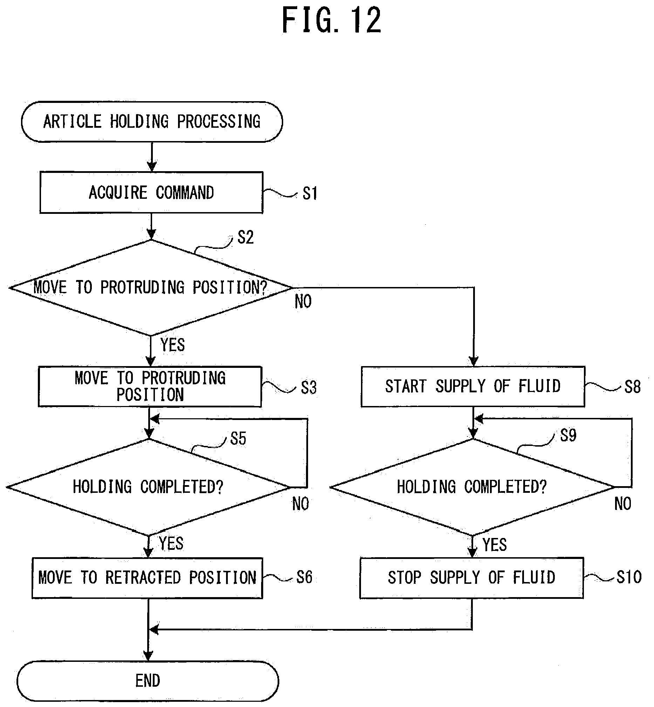

Article holding processing that is performed by the article holding device 23 of a first embodiment will be explained with reference to FIG. 12. When the operator inputs a start command to the control portion 80 via the PC 100, the CPU 81 reads out the article supply program from the ROM 82 to the RAM 83. This processing is performed in a state in which the arm device 3 disposes the article holding device 23 in the holding position and the uppermost article 9 placed on the placement table 21 is in contact with the holding portion 33. When the processing is started, the electromagnetic valves 91 and 92 are closed. The start command includes the command as to whether or not to move the needles 52 and 54 to the protruding position. When the command to move the needles 52 and 54 to the protruding position is acquired, the article holding device 23 drives the air cylinders 35 and 36, moves the needles 52 and 54 from the retracted position to the protruding position, and does not supply the fluid to the flow paths 70 to 78. When the command to prohibit the movement of the needles 52 and 54 to the protruding position is acquired, the article holding device 23 maintains the needles 52 and 54 in the retracted position, and supplies the fluid to the flow paths 70 to 78. The operator inputs the command as to whether or not to move the needles 52 and 54 to the protruding position to the article holding device 23 depending on the material of the article 9. The input is performed by the operator via the PC 100. When the article 9 easily allows air to pass through, the operator inputs the command to move the needles 52 and 54 to the protruding position. When the article 9 easily allows air to pass through, the material of the article 9 is a mesh cloth, a sponge cloth, or a cloth with a relatively rough texture. When the article 9 does not easily allow air to pass through, the operator does not input the command to move the needles 52 and 54 to the protruding position. When the article 9 does not easily allow air to pass through, the material of the article 9 is a resin sheet cloth or a cloth with a relatively fine texture.

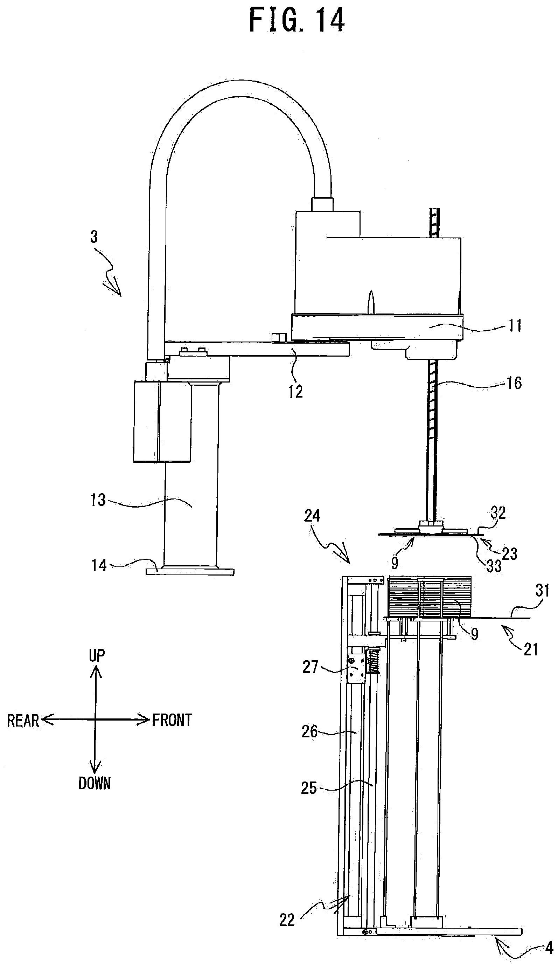

The CPU 81 acquires the command as to whether or not to move the needles 52 and 54 to the protruding position, the command being included in the start command (step S1). The CPU 81 determines whether or not to move the needles 52 and 54 to the protruding position, on the basis of the start command acquired from the PC 100 at step S1 (step S2). When it is determined that the needles 52 and 54 are to be moved to the protruding position (yes at step S2), the CPU 81 switches the electromagnetic valve 92 from the closed state to the open state, and moves the needles 52 and 54 from the retracted position to the protruding position (step S3). When the electromagnetic valve 92 is open, the air flows to the air cylinders 35 and 36 via the air tube 95. The air cylinders 35 and 36 respectively push the support portions 38 and 39 diagonally downward along the extending directions of the holes 51 and 53. As shown in FIG. 6 and FIG. 7, the support portions 38 and 39 respectively move diagonally downward along the holes 51 and 53. The needles 52 and 54 respectively supported by the support portions 38 and 39 protrude downward from the horizontal portion 331 of the holding portion 33. The needles 52 and 54 pierce the uppermost article 9 placed on the placement table 21, and hold the uppermost article 9. The needles 52 and 54 are inclined such that the lower the position of the needles 52 and 54, the further they are separated from the center line M. The needles 52 and 54 are inclined in mutually opposite directions with respect to the center line M. Therefore, the article holding device 23 can hold the article 9 such that the article 9 is pulled in the left-right direction, and wrinkles are not easily formed on the article 9 when the article 9 is held. The CPU 81 determines whether or not the holding is completed (step S5). As shown in FIG. 14, after moving the article holding device 23 upward in accordance with the command from the PC 100, the arm device 3 moves the article holding device 23 to the conveyance position. While the article holding device 23 is moving from the holding position to the conveyance position, the article holding device 23 maintains the state of holding one sheet of the article 9. The PC 100 inputs a signal indicating whether or not the article holding device 23 is in the conveyance position, to the control portion 80, on the basis of the signal acquired from the arm device 3. When, on the basis of the signal acquired from the PC 100, it is determined that the article holding device 23 is in the conveyance position, the CPU 81 determines that the holding is completed.

When the holding is not completed (no at step S5), the CPU 81 returns the processing to step S5. When the holding is completed (yes at step S5), the CPU 81 switches the electromagnetic valve 92 from the open state to the closed state, and moves the needles 52 and 54 from the protruding position to the retracted position (step S6). When the electromagnetic valve 92 is closed, the air does not flow to the air cylinders 35 and 36 via the air tube 95. The piston of each of the air cylinders 35 and 36 receives a diagonally upward force of the urging member. As shown in FIG. 8 and FIG. 9, the support portions 38 and 39 respectively move diagonally upward along the holes 51 and 53. The needles 52 and 54 respectively supported by the support portions 38 and 39 are retracted above the horizontal portion 331 of the holding portion 33. The needles 52 and 54 are removed from the article 9, and the article 9 separates from the holding portion 33. The article 9 is placed on the work table 6. Then, the CPU 81 ends the article holding processing.

When it is determined that the needles 52 and 54 should not be moved to the protruding position (no at step S2), the CPU 81 switches the electromagnetic valve 91 from the closed state to the open state, and maintains the electromagnetic valve 92 in the closed state. The CPU 81 thus maintains the needles 52 and 54 in the retracted position, and supplies the fluid to the flow paths 70 to 78 (step S8). The air flowing through the flow paths 71 to 78 is ejected from the holes 61 to 68 along the holding portion 33. The air moves along the inclined portions 44 and 45 of the holding portion 33, between the holding portion 33 and the uppermost article 9. The air ejected from the holes 61, 63, 65 and 66 provided to the front of the recessed portion 43 and the holes 62, 64, 67 and 68 provided to the rear of the recessed portion 43 flows away from the center line M (refer to FIG. 6). The holes 61, 64, 65 and 67, and the holes 62, 63, 66 and 68 are disposed on both sides of the center line M. The air ejected from the holes 61 to 68 tends to flow together with the air present in the recessed portion 43. Therefore, the recessed portion 43 tends to have a negative pressure. The article holding device 23 sucks and holds the uppermost article 9 using the negative pressure generated between the holding portion 33 and the uppermost article 9 placed on the placement table 21.

In the same manner as in the processing at step S5, the CPU 81 determines whether or not the holding is completed (step S9). When the holding is not completed (no at step S9), the CPU 81 returns the processing to step S9. When the holding is completed (yes at step S9), the CPU 81 switches the electromagnetic valve 91 from the open state to the closed state, maintains the electromagnetic valve 92 in the closed state, and stops the processing that supplies the fluid to the flow paths 70 to 78 (step S10). The article holding device 23 stops the ejection of the air along the holding portion 33 from the holes 61 to 68 of the holding portion 33. The article 9 is placed on the work table 6 by its own weight. Then, the CPU 81 ends the article holding processing.

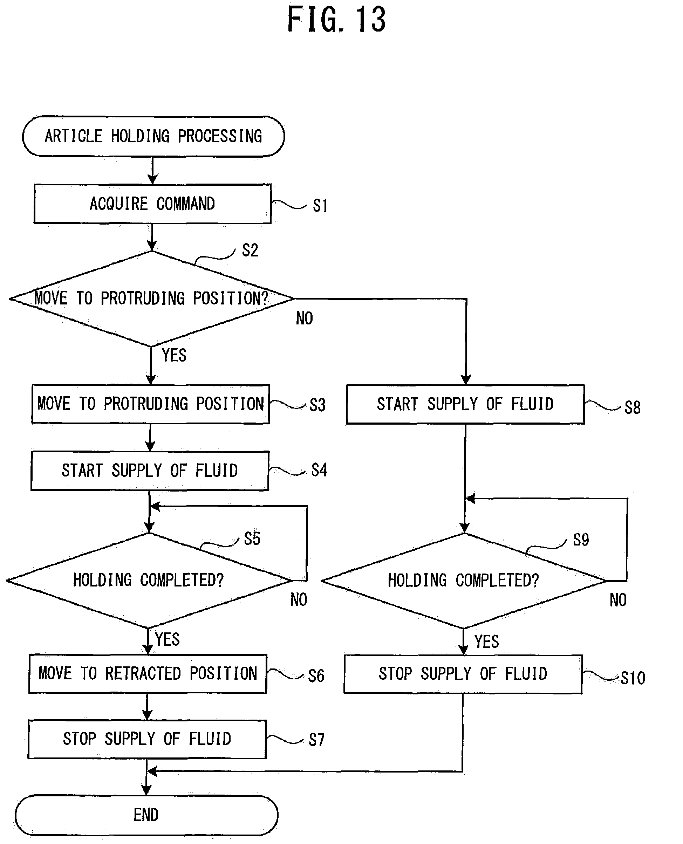

Article holding processing of a second embodiment will be explained with reference to FIG. 13. In the same manner as the article holding device 23 of the first embodiment, the article holding device 23 of the second embodiment receives, from the operator, the command as to whether or not to move the needles 52 and 54 to the protruding position. When the operator inputs the start command to the control portion 80 via the PC 100, the CPU 81 reads out the article supply program from the ROM 82 to the RAM 83, and performs this processing. When the processing is started, the electromagnetic valves 91 and 92 are closed. The start command includes the command as to whether or not to move the needles 52 and 54 to the protruding position. When the command to move the needles 52 and 54 to the protruding position is acquired, the article holding device 23 drives the air cylinders 35 and 36, moves the needles 52 and 54 from the retracted position to the protruding position, and supplies the fluid to the flow paths 70 to 78. When the command to prohibit the movement of the needles 52 and 54 to the protruding position is acquired, the article holding device 23 maintains the needles 52 and 54 in the retracted position, and supplies the fluid to the flow paths 70 to 78. In summary, the article holding processing of the second embodiment is different from the article holding processing of the first embodiment in that the fluid is supplied to the flow paths 70 to 78 when the command to move the needles 52 and 54 to the protruding position is acquired.

In FIG. 13, processing that is the same as the article holding processing of the first embodiment in FIG. 12 is denoted by the same reference numeral. The article holding processing of the second embodiment is different from the article holding processing of the first embodiment in that processing at step S4 is performed between step S3 and step S5, and processing at step S7 is performed after step S6. Hereinafter, the processing at step S4 and the processing at step S7 that are different from the first embodiment will be explained and an explanation of the same processing in the first embodiment will be omitted. When it is determined that the needles 52 and 54 are to be moved to the protruding position, on the basis of the start command (S1, yes at step S2), the CPU 81 switches the electromagnetic valve 92 from the closed state to the open state, and moves the needles 52 and 54 from the retracted position to the protruding position (step S3). The CPU 81 switches the electromagnetic valve 91 from the closed state to the open state, and supplies the fluid to the flow paths 70 to 78 (step S4). The air is ejected from the holes 61 to 68 along the holding portion 33. The air flows along the inclined portions 44 and 45 of the holding portion 33, between the holding portion 33 and the uppermost article 9. The air ejected from the holes 61, 63, 65 and 66 provided to the front of the recessed portion 43 and the holes 62, 64, 67 and 68 provided to the rear of the recessed portion 43 flows away from the center line M (refer to FIG. 6). The holes 61, 64, 65 and 67, and the holes 62, 63, 66 and 68 are disposed on both sides of the center line M. The air ejected from the holes 61 to 68 tends to flow together with the air present in the recessed portion 43. Therefore, the recessed portion 43 tends to have a negative pressure. The article holding device 23 can suck and hold the uppermost article 9, not only by piercing the article 9 using the needles 52 and 54 that have moved to the protruding position at step S3, but also by using the negative pressure generated between the holding portion 33 and the uppermost article 9 placed on the placement table 21. The CPU 81 determines whether or not the holding is completed (step S5). When the holding is completed (yes at step S5), the CPU 81 switches the electromagnetic valve 92 from the open state to the closed state, and moves the needles 52 and 54 from the protruding position to the retracted position (step S6). The CPU 81 switches the electromagnetic valve 91 from the open state to the closed state, and stops the processing that supplies the fluid to the flow paths 70 to 78 (step S7). The article holding device 23 stops the ejection of the air along the holding portion 33 from the holes 61 to 68 of the holding portion 33. The article 9 is placed on the work table 6 by its own weight. Then, the CPU 81 ends the article holding processing.

The base portion 32, the holding portion 33 and the horizontal portion 331 of the article holding device 23 of the above-described embodiments are examples of a base portion, a holding portion and a horizontal portion of the present invention. The flow paths 70 to 78 are an example of flow paths of the present invention. The needles 52 and 54 are an example of needles of the present invention. The air cylinders 35 and 36 are an example of drive portions of the present invention. The control portion 80 is an example of a control portion of the present invention. Each of the holes 61 and 65 is an example of a first hole of the present invention. Each of the holes 62 and 68 is an example of a second hole of the present invention. Each of the holes 63 and 66 is an example of a third hole of the present invention. Each of the holes 64 and 67 is an example of a fourth hole of the present invention. Each of the flow paths 71 and 75 is an example of a first flow path of the present invention. Each of the flow paths 72 and 78 is an example of a second flow path of the present invention. Each of the flow paths 73 and 76 is an example of a third flow path of the present invention. Each of the flow paths 74 and 77 is an example of a fourth flow path of the present invention. The first flow path portion 41, the recessed portion 43, the second flow path portion 42, the first inclined portion 44 and the second inclined portion 45 are examples of a first flow path portion, a recessed portion, a second flow path portion, a first inclined portion and a second inclined portion of the present invention. The control portion 80 that performs the processing at step S3 and step S6 is an example of a needle control portion of the present invention. The control portion 80 that performs the processing at step S4 and step S7 is an example of a fluid control portion of the present invention. The control portion 80 that performs the processing at step S3, step S4, step S6, step S7, step S8 and step S9 is an example of the control portion of the present invention. The electromagnetic valve 91 is an example of a supply portion of the present invention. The control portion 80 that performs the processing at step S1 is an example of an acquisition portion of the present invention.

By supplying the fluid to the flow paths 70 to 78, the article holding device 23 can suck and hold the sheet-like article 9, such as a cloth, using the negative pressure generated between the sheet-like article 9 and the holding portion 33. The article holding device 23 can also hold the sheet-like article 9 that easily allows air to pass through, by moving the needles 52 and 54 to the protruding position and piercing the article 9 using the needles 52 and 54. Thus, the article holding device 23 can hold the article 9 even when the article 9 is the sheet-like article 9 which easily allows air to pass through and which is unlikely to be sucked and held because the negative pressure is unlikely to be generated between the article 9 and the holding portion 33.

The needles 52 and 54 of the article holding device 23 of a present aspect are disposed facing each other in a direction parallel to the horizontal plane such that the holes 61 to 68 are positioned therebetween. In the article holding device 23, the needles 52 and 54 are disposed facing each other such that the holes 61 to 68 are positioned therebetween. Therefore, in comparison to a device in which the needles 52 and 54 are positioned on one side of the holes 61 to 68, or a device in which the single needle 52 and the single needle 54 are provided, the sheet-like article 9 that easily allows air to pass through can be stably held on the holding portion 33 using the needles 52 and 54.

When the needles 52 and 54 of the article holding device 23 are in the protruding position, the leading end of each of the needles 52 and 54 is inclined with respect to the holding portion 33 in the direction of separating from the holes 61 to 68. As shown in FIG. 7, the leading end of the needle 52 (522) is inclined diagonally rightward and downward with respect to the holding portion 33, and the leading end of the needle 54 (542) is inclined diagonally leftward and downward with respect to the holding portion 33. When the needles 52 and 54 pierce the article 9, the article holding device 23 can inhibit the article 9 from bending. Therefore, in comparison to a device in which the leading end of each of the needles is not inclined with respect to the holding portion in the direction of separating from the holes, the article holding device 23 can stably hold the sheet-like article 9 that easily allows air to pass through on the holding portion 33, using the needles 52 and 54.

The article holding device 23 acquires the command as to whether or not to move the needles 52 and 54 to the protruding position, via the PC 100. The control portion 80 of the article holding device 23 controls the drive of the air cylinders 35 and 36 and the supply of the fluid to the flow paths 70 to 78. When the command to move the needles 52 and 54 to the protruding position is acquired (yes at step S2), the control portion 80 drives the air cylinders 35 and 36 and moves the needles 52 and 54 from the retracted position to the protruding position (step S3). When the command to prohibit the movement of the needles 52 and 54 to the protruding position is acquired (no at step S2), the control portion 80 maintains the needles 52 and 54 in the retracted position, and supplies the fluid to the flow paths 70 to 78 (step S8). The article holding device 23 can control whether or not to move the needles 52 and 54. When the article 9 is not held by the needles 52 and 54, the article holding device 23 maintains the needles 52 and 54 in the retracted position. Therefore, the article 9 is not damaged by the needles 52 and 54. That is, the article holding device 23 can hold the article 9 without damage by the needles 52 and 54 when the article 9 is able to be sucked and held by the article holding device 23. The article holding device 23 moves the needles 52 and 54 to the protruding position only when the article 9 is to be held by the needles 52 and 54. It is thus possible to hold the article 9 by piercing the article 9 using the needles 52 and 54 only when the article 9 easily allows air to pass through.

The control portion 80 of the article holding device 23 of the first embodiment drives the air cylinders 35 and 36, and controls the needles 52 and 54 between the retracted position and the protruding position. The control portion 80 controls the drive of the electromagnetic valve 91 that switches whether or not to supply the fluid to the flow paths 70 to 78. When the command to move the needles 52 and 54 to the protruding position is acquired, the control portion 80 drives the air cylinders 35 and 36 and moves the needles 52 and 54 from the retracted position to the protruding position (step S3). When the command to move the needles 52 and 54 to the protruding position is acquired, the control portion 80 does not switch the electromagnetic valve 91 from the closed state to the open state. When the article 9 is held by the needles 52 and 54, the article holding device 23 of the first embodiment need not necessarily supply the fluid to the flow paths 70 to 78.

The control portion 80 of the article holding device 23 of the second embodiment drives the air cylinders 35 and 36, and controls the needles 52 and 54 between the retracted position and the protruding position. The control portion 80 controls the drive of the electromagnetic valve 91 that switches whether or not to supply the fluid to the flow paths 70 to 78. When the command to move the needles 52 and 54 to the protruding position is acquired, the control portion 80 drives the air cylinders 35 and 36 and moves the needles 52 and 54 from the retracted position to the protruding position (step S3). The control portion 80 switches the electromagnetic valve 91 from the closed state to the open state and supplies the fluid to the flow paths 70 to 78 (step S4). Therefore, the article holding device 23 of the second embodiment can supply the fluid to the flow paths 70 to 78 regardless of whether or not the article 9 is to be held using the needles 52 and 54. Therefore, when the article holding device 23 holds the article 9 on the holding portion 33, it is sufficient that the article holding device 23 supplies the fluid to the flow paths 70 to 78. Thus, it becomes easy to control the supply of the fluid to the flow paths 70 to 78. When the article holding device 23 holds the article 9 on the holding portion 33, the fluid ejected from the holes 61 to 68 flows between the article 9 and the holding portion 33. Therefore, wrinkles are not easily formed on the article 9 held by the holding portion 33.

The article holding device 23 is provided with the holes 61, 62, 65 and 68, the flow paths 71, 72, 75 and 78, and the recessed portion 43. When the article holding device 23 supplies the fluid to the flow paths 71, 72, 75 and 78, the fluid is ejected in the first direction from each of the holes 61 and 65, and the fluid is ejected in the second direction from each of the holes 62 and 68. In this manner, the holes 61 and 65 and the holes 62 and 68 eject the fluid in mutually opposite directions with the recessed portion 43 positioned therebetween. It is thus possible to effectively generate a negative pressure in the space of the recessed portion 43 between the holding portion 33 and the article 9, and the article 9 that faces the holding portion 33 can be drawn to the recessed portion 43 side more strongly than in a device that is not provided with the recessed portion 43. Therefore, the article holding device 23 can easily increase the suction power to be larger than that of a known device, and can more reliably suck and hold the sheet-like article 9, such as a cloth.

The article holding device 23 is provided with the holes 63, 64, 66 and 67, and the flow paths 73, 74, 76 and 77. Since the article holding device 23 supplies the fluid to the flow paths 71 to 78, in comparison to a device that supplies the fluid only to the flow paths 71, 72, 75 and 78, it is possible to more reliably generate a negative pressure in the space of the recessed portion 43 between the holding portion 33 and the article 9. Thus, the article 9 that faces the holding portion 33 can be drawn to the recessed portion 43 side.

The article holding device 23 has the first flow path portion 41, the second flow path portion 42, the first inclined portion 44 and the second inclined portion 45. In the article holding device 23, the fluid ejected from the holes 61, 64, 65 and 67 moves along the first inclined portion 44 and the fluid ejected from the holes 62, 63, 66 and 68 moves along the second inclined portion 45, between the holding portion 33 and the article 9. Therefore, in comparison to a device that is not provided with first and second inclined portions, the article holding device 23 tends to flow the fluid, can more reliably generate a negative pressure in the space of the recessed portion 43 between the holding portion 33 and the article 9, and can draw the article 9 that faces the holding portion 33 to the recessed portion 43 side.

The article holding device 23 of the present invention can be changed in various ways besides the above-described embodiments. The article holding device 23 need not necessarily be provided for the article supply devices 4 and 5 of the conveyance system 1. The article holding device 23 need not necessarily be detachably mounted on the arm device 3. When the article holding device 23 is mounted on the arm device 3, the structure of the arm device 3 may be changed as appropriate. The structure of the base portion 32 may be changed as appropriate. The base portion 32 may have a shape other than a rectangle, such as an elliptical shape in a plan view. The number, the angle of inclination with respect to the holding portion 33, and the arrangement etc. of the needles 52 and 54 may be changed as appropriate. The needles 52 and 54 need not necessarily be disposed facing each other with the holes 61 to 68 positioned therebetween. The structure and arrangement of the support portions 38, 39, 48 and 49 that support the needles 52 and 54 may be changed as appropriate. The needles 52 and 54 may be inclined with respect to the holding portion 33 in a direction in which the leading end of each of the needles 52 and 54 are closer to the holes 61 to 68. The leading end of each of the needles 52 and 54 may be directed diagonally downward in the front-rear direction. In this case, the support portions 38 and 39 may extend in the front-rear direction and may movably support the needles 52 and 54.

In the second embodiment, the electromagnetic valve 91 may be communicated not only with the supply port 37 but also with the air cylinders 35 and 36, and the control portion 80 may perform the processing that supplies the fluid to the flow paths and the processing that controls the positions of the needles at the same timing. It is sufficient that the holes 61 to 68 be provided such that the fluid can be supplied along the holding portion 33. The number, arrangement, direction with respect to the flow paths, and size etc. of the holes may be changed as appropriate. The holes of the article holding device may be the hole 61 and the hole 62 only. The holes of the article holding device may be at least one of the holes 61 and 65 and at least one of the holes 62 and 68. In order to effectively generate a negative pressure in the recessed portion 43, in the article holding device, it is preferable that the first hole be provided in the vicinity of a boundary between the recessed portion 43 and the first flow path portion 41, in comparison to when the first hole is provided in a position separated from the boundary. In the article holding device, it is preferable that the second hole be provided in the vicinity of the boundary between the recessed portion 43 and the second flow path portion 42, in comparison to when the second hole is provided in a position separated from the boundary. For example, regarding the holes of the article holding device, it is preferable to provide the holes 61 and 62 only, in comparison to when the holes 65 and 68 only are provided. The holes of the article holding device may be the holes 61, 62, 63 and 64 only, or may be the holes 65, 66, 67 and 68 only. The flow paths may be changed as appropriate in accordance with the number, shape, size and arrangement of the holes. The flow paths of the article holding device may be at least one of the flow paths 71 and 75 and at least one of the flow paths 72 and 78. The first flow path and the second flow path of the article holding device may have different supply ports to supply the fluid. The flow paths of the article holding device may be the flow paths 71, 72, 73 and 74 only. The holding portion 33 of the article holding device 23 need not necessarily include all or some of the first flow path portion 41, the recessed portion 43, the second flow path portion 42, the first inclined portion 44 and the second inclined portion 45. The shapes, sizes and arrangement etc. of the horizontal portion 331, the first flow path portion 41, the recessed portion 43, the second flow path portion 42, the first inclined portion 44 and the second inclined portion 45 may be changed as appropriate. The recessed portion 43 may be recessed upward in a hemispherical shape.

It is sufficient that an article holding program to execute the article holding processing in FIG. 12 and FIG. 13 may be stored in a storage device provided in the article holding device 23 until the article holding device 23 executes the program. The acquisition method and acquisition route of the program and each of the storage devices that store the program may be changed as appropriate. The article supply device 4 may receive the program to be executed by a processor, from other devices via a cable or wireless communication, and may store the received program in the storage device. The other devices include, for example, a PC and a server that is connected via a network. The storage device provided in the article holding device 23 may be a storage device, such as a HDD or a SSD.

Each of the steps of the article holding processing in FIG. 12 and FIG. 13 is not limited to the example in which the CPU 81 performs each of the steps, and another electronic device (an ASIC, for example) may perform part or all of the processing. Each of the steps of the above-described processing may be distributed and processed by a plurality of electronic devices (a plurality of CPUs, for example). Each of the steps of the article holding processing of the above-described embodiments may be changed in order, omitted or added, if necessary. The present invention also includes an aspect in which an OS or the like working on the article holding device 23 performs part or all of the actual processing in accordance with a command from the processor of the article holding device 23 and realizes the functions of the above-described embodiments. The control portion 80 may acquire the material of the article as the command as to whether or not to move the needles to the protruding position. In this case, the control portion 80 may store, in advance, a list of the materials that easily allow air to pass through and may determine whether the material of the acquired article easily allows air to pass through. The control portion 80 may move the needles to the protruding position when the material of the acquired article easily allows air to pass through, and may maintain the needles in the retracted position when the material of the article does not easily allow air to pass through. The control portion 80 may read a radio frequency identification (RFID) or the like assigned to the article or the placement table 21, and may acquire the command as to whether or not to move the needles to the protruding position. The control portion 80 may control the article supply mechanism 24.

## Claims

1. An article holding device (23) comprising:
a base portion (32) including a holding portion (33) provided on a lower surface of the base portion;
flow paths (70-78) communicated with holes (61-68) provided in the holding portion, the holding portion configured to suck and hold a sheet-like article using a negative pressure generated between the holding portion and the sheet-like article on a lower surface of the holding portion by a fluid supplied to the flow paths being ejected from the holes;
needles (52,54) provided on the base portion in a posture inclined with respect to the holding portion;
drivers (35,36) configured to move the needles between a protruding position and a retracted position, the protruding position being a position in which the needles protrude downward from the holding portion, and the retracted position being a position in which the needles are retracted above the holding portion;
an acquisition portion (80) configured to acquire a command as to whether to move the needles to the protruding position; and
a control portion (80) configured to drive the drivers and to move the needles from the retracted position to the protruding position when the acquisition portion acquires a command to move the needles to the protruding position, and configured to maintain the needles in the retracted position and to supply the fluid to the flow paths when the acquisition portion acquires a command to prohibit a movement of the needles to the protruding position.

2. The article holding device according to claim 1, wherein
the needles are disposed facing each other, with the holes positioned therebetween, in a direction parallel to a horizontal plane.

3. The article holding device according to claim 2, wherein
the needles are inclined in a direction in which a leading end of each of the needles separate from the holes with respect to the holding portion when the needles are in the protruding position.

4. The article holding device according to any one of claims 1 to 3, wherein
the control portion includes a needle control portion (80) and a fluid control portion (80),
the needle control portion is configured to drive the drivers to control the movement of the needles to the retracted position and the protruding position,
the fluid control portion is configured to control drive of a supply portion (91) to supply the fluid to the flow paths, and
when the acquisition portion acquires the command to move the needles to the protruding position, the needle control portion drives the drivers to move the needles from the retracted position to the protruding position, and the fluid control portion does not drive the supply portion.

5. The article holding device according to any one of claims 1 to 3, wherein
the control portion includes a needle control portion (80) and a fluid control portion (80),
the needle control portion is configured to drive the drivers to control the movement of the needles to the retracted position and the protruding position,
the fluid control portion is configured to control drive of a supply portion to supply the fluid to the flow paths, and
when the acquisition portion acquires the command to move the needles to the protruding position, the needle control portion drives the drivers to move the needles from the retracted position to the protruding position, and the fluid control portion drives the supply portion to supply the fluid to the flow paths.

6. The article holding device according to claim 1, wherein
the holding portion has a horizontal portion (331) that extends horizontally,
the holes include a first hole (61,65) and a second hole (62,68),
the first hole is provided on one side in a predetermined direction parallel to the horizontal portion of the holding portion, and is open in a first direction of a direction orthogonal to the predetermined direction,
the second hole is provided on another side, which is opposite from the one side, of the holding portion in the predetermined direction, and is open in a second direction, which is a direction opposite to the first direction, of in a direction parallel to the first hole,
the flow paths include a first flow path (71,75) and a second flow path (72,78),
the first flow path extends in the first direction toward the first hole and is communicated with the first hole,
the second flow path extends in the second direction toward the second hole and is communicated with the second hole, and
the base portion has a recessed portion (43) which is provided between the first hole and the second hole and which is recessed above the horizontal portion of the holding portion.

7. The article holding device according to claim 6, wherein
the holes further include a third hole (63,66) and a fourth hole (64,67),
the third hole is provided on the one side of the recessed portion of the holding portion in the predetermined direction,
the fourth hole is provided on the other side of the recessed portion of the holding portion in the predetermined direction,
the flow paths further include a third flow path (73,76) and a fourth flow path (74,77),
the third flow path is communicated with the third hole and the first flow path, and a direction from the third flow path toward the third hole is the second direction, and
the fourth flow path is communicated with the fourth hole and the second flow path, and a direction from the fourth flow path toward the fourth hole is the first direction.

8. The article holding device according to claim 7, wherein
the holding portion is provided with a first flow path portion (41), a second flow path portion (42), a first inclined portion (44) and a second inclined portion (45),
the first flow path portion is provided with the first hole and the third hole, and protrudes below the recessed portion,
the second flow path portion is disposed on the opposite side to the first flow path portion with respect to the recessed portion, and the second flow path portion is provided with the second hole and the fourth hole, and protrudes below the recessed portion,
the first inclined portion is connected to an upper end of the first flow path portion, the recessed portion and an upper end of the second flow path portion, and is inclined downward toward the first direction, and
the second inclined portion is connected to the upper end of the first flow path portion, the recessed portion and the upper end of the second flow path portion, and is inclined downward toward the second direction.
